(19) **Europäisches Patentamt / European Patent Office / Office européen des brevets**

(11) **EP 4 152 216 A1**

(12) # EUROPEAN PATENT APPLICATION
published in accordance with Art. 153(4) EPC

(43) Date of publication:
**22.03.2023 Bulletin 2023/12**

(21) Application number: **21939983.9**

(22) Date of filing: **14.10.2021**

(51) International Patent Classification (IPC):
***G06N 10/00*** ***(2019.01)***

(86) International application number:
**PCT/CN2021/123862**

(87) International publication number:
**WO 2023/010684 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.08.2021 CN 202110893354**

(71) Applicant: **Tencent Technology (Shenzhen)
Company Limited
Shenzhen, Guangdong 518057 (CN)**

(72) Inventors:
• **YUAN, Pei**
  **Shenzhen, Guangdong 518057 (CN)**
• **YANG, Shuai**
  **Shenzhen, Guangdong 518057 (CN)**
• **TIAN, Guojing**
  **Shenzhen, Guangdong 518057 (CN)**
• **SUN, Xiaoming**
  **Shenzhen, Guangdong 518057 (CN)**
• **ZHANG, Sheng Yu**
  **Shenzhen, Guangdong 518057 (CN)**

(74) Representative: **EP&C
P.O. Box 3241
2280 GE Rijswijk (NL)**

(54) **QUANTUM STATE PREPARATION CIRCUIT GENERATION METHOD AND SUPERCONDUCTING QUANTUM CHIP**

(57) Provided are a method and apparatus for generating a quantum state preparation circuit, a superconducting quantum chip, and a storage medium. The method includes: configuring an input register including n qubits; acquiring m ancilla qubits, and configuring a copy register and a phase register respectively, the copy register including m/2 ancilla qubits, and the phase register including m/2 ancilla qubits; processing the qubits through the input register, the copy register, and the phase register, to obtain a diagonal unitary matrix quantum circuit; combining the diagonal unitary matrix quantum circuit and a single bit gate to obtain a uniform control matrix circuit; and combining different uniform control matrix circuits to obtain a quantum state preparation circuit.

FIG. 3

**EP 4 152 216 A1**

**Description**

RELATED APPLICATION

This application claims priority to Chinese Patent Application No. 202110893354.3 filed on August 4, 2021, which is incorporated herein by reference in its entirety.

FIELD OF THE TECHNOLOGY

This disclosure relates to quantum design technologies, and in particular, to a method and apparatus for generating quantum state preparation circuit, a superconducting quantum chip, and a storage medium.

BACKGROUND OF THE DISCLOSURE

A quantum bit (qubit) on a superconducting chip is a carrier of a quantum state, carrying quantum information and executing a quantum algorithm. Superconducting quantum computing has the advantage of high running speed, and thus is widely applied. Quantum computing is divided into single-bit logic gate computation and two-bit logic gate computation. The two-bit logic gate computation includes a quantum state exchange operation, a controlled-NOT gate (CNOT gate) operation, a controlled phase (CP) gate operation, and the like. In this process, quantum state preparation is a fundamental and important step in the design of quantum algorithms. However, in the related art, only the case that ancilla qubits are of exponential order is considered in a quantum state preparation circuit, but there are often no ancilla qubits of exponential order in the preparation of quantum states, so the preparation of quantum states only considering the case that the quantity of ancilla qubits is of exponential order is not suitable for actual application scenarios. In addition, none of the existing quantum state preparation circuits have achieved standard quantum state preparation, which cannot satisfy actual use requirements.

SUMMARY

An embodiment of this disclosure provides a method for generating a quantum state preparation circuit, including:

configuring an input register storing n qubits;

acquiring m ancilla qubits, and configuring a copy register and a phase register storing m/2 ancilla qubits and m/2 ancilla qubits, respectively;

processing qubits through the input register, the copy register, and the phase register, to obtain a diagonal unitary matrix quantum circuit;

combining the diagonal unitary matrix quantum circuit and a single bit gate to obtain a uniform control matrix circuit; and

combining different uniform control matrix circuits to obtain a quantum state preparation circuit.

An embodiment of this disclosure also provides an apparatus for generating quantum state preparation circuit, including:

a quantum preparation module, configured to configure an input register storing n qubits;

a quantum transport module, configured to acquire m ancilla qubits; and

the quantum preparation module, further configured to:

configure a copy register and a phase register storing m/2 ancilla qubits and m/2 ancilla qubits respectively;

process qubits through the input register, the copy register, and the phase register, to obtain a diagonal unitary matrix quantum circuit;

combine the diagonal unitary matrix quantum circuit and a single bit gate to obtain a uniform control matrix circuit; and

combine different uniform control matrix circuits to obtain a quantum state preparation circuit.

An embodiment of this disclosure also provides a superconducting quantum chip, including a quantum state preparation circuit, the quantum state preparation circuit being obtained by the quantum state preparation circuit generating method provided in the embodiments of this disclosure.

An embodiment of this disclosure also provides an electronic device, including:

a memory, configured to store an executable instruction; and

a processor, configured to implement, when executing the executable instruction stored in the memory, the quantum state preparation circuit generating method provided in the embodiments of this disclosure.

An embodiment of this disclosure also provides a computer-readable storage medium, storing an executable instruction, the executable instruction, when executed by a processor, implementing the quantum state preparation circuit generating method provided in the embodiments of this disclosure.

BRIEF DESCRIPTION OF THE DRAWINGS

FIG. 1 is a schematic diagram of an disclosure scenario of a quantum state preparation circuit generating method according to an embodiment of this disclosure.

FIG. 2 is a schematic diagram of a composition structure of a quantum state preparation circuit generating apparatus according to an embodiment of this disclosure.

FIG. 3 is a schematic diagram of a process of configuring a quantum state preparation circuit according to an embodiment of this disclosure.

FIG. 4 is a schematic framework diagram of a unitary matrix quantum circuit of a quantum state preparation circuit according to an embodiment of this disclosure.

FIG. 5 is a schematic diagram of a process of configuring a quantum state preparation circuit according to an embodiment of this disclosure.

FIG. 6 is a schematic structural diagram of a uniform control matrix circuit according to an embodiment of this disclosure.

FIG. 7 is a schematic structural diagram of a quantum state preparation circuit according to an embodiment of this disclosure.

FIG. 8 is a schematic framework diagram of a unitary matrix quantum circuit of a quantum state preparation circuit according to an embodiment of this disclosure.

DESCRIPTION OF EMBODIMENTS

To make objectives, technical solutions, and advantages of this disclosure clearer, the following further describes this disclosure in detail with reference to the accompanying drawings. The described embodiments are not to be considered as a limitation to this disclosure. All other embodiments obtained by a person of ordinary skill in the art without creative efforts shall fall within the protection scope of this disclosure.
In the following descriptions, the term "some embodiments" describes subsets of all possible embodiments, but it may be understood that "some embodiments" may be the same subset or different subsets of all the possible embodiments, and can be combined with each other without conflict.
Before the embodiments of this disclosure are further described in detail, a description is made on terms in the embodiments of this disclosure, and the terms in the embodiments of this disclosure are applicable to the following explanations.

1) Superconducting qubit: a superconducting quantum circuit formed by using a Josephson junction.

2) Based on: is used for representing a condition or status on which one or more operations to be performed depend. When the condition or status is satisfied, the one or more operations may be performed immediately or after a set delay. Unless explicitly stated, there is no limitation on the order in which the plurality of operations are performed.

3) Superconducting quantum chip: a central processing unit of a superconducting quantum computer. A quantum computer is a machine that performs calculations through the principle of quantum mechanics. Based on the superposition principle of quantum mechanics and quantum entanglement, the quantum computer has relatively strong parallel processing capabilities and can resolve some problems that are difficult for a classical computer to calculate. The zero resistance characteristic of superconducting qubits and a manufacturing process close to that of integrated circuits make a quantum computing system constructed by using superconducting qubits one of the most promising systems currently for implementing practical quantum computing.

4) Quantum circuit: a quantum computing model that consists of a series of quantum gate sequences, and the calculation is completed by the quantum gates.

5) Gray code path: a sequence of bit strings in $\{0,1\}^n$, where two adjacent bit strings differ by exactly one bit.

6) Asymptotic upper bound $o(\square)$: $g(n) = O(f(n))$ represents that there are constants c and $n_0$, for all integers $n \geq n_0$, that satisfy any $0 \leq g(n) \leq cf(n)$.

7) Asymptotic lower bound $\Omega(\square)$: $g(n) = \Omega(f(n))$ represents that there are constants c and $n_0$, for all integers $n \geq n_0$, that satisfy any $g(n) \geq cf(n) \geq 0$.

8) Unitary transformation: an isometric transformation of a unitary space V. For $\forall \alpha, \beta \in V$, the linear transformation $\sigma$ that satisfies the condition $(\sigma(\alpha), \sigma(\beta)) = (\alpha, \beta)$ is referred to as unitary transformation. For each unitary transformation $\sigma$ of the n-dimensional unitary space V, there is an orthonormal basis of V, so that the matrix of $\sigma$ about this basis is diagonal, and the modulus of the elements on the diagonal is 1.

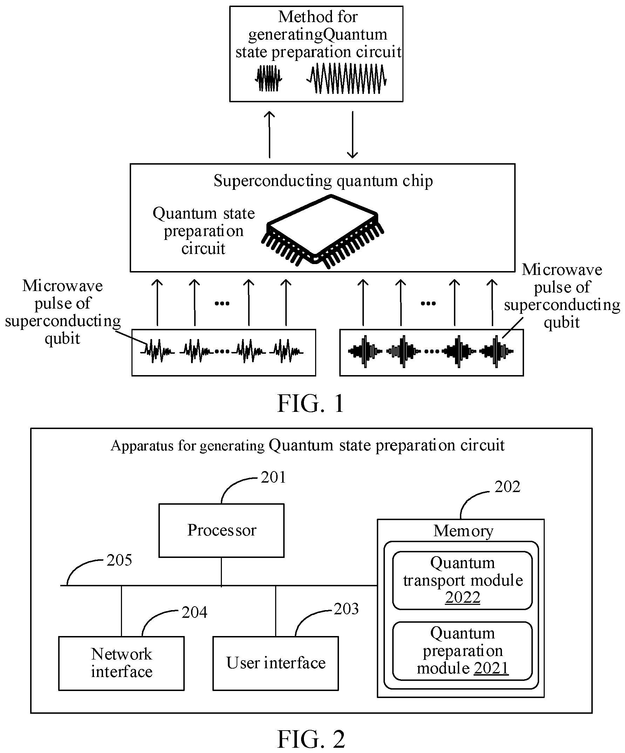

The following describes the quantum state preparation circuit generating method provided in the embodiments of this disclosure. FIG. 1 is a schematic diagram of an application scenario of a quantum state preparation circuit generating method according to an embodiment of this disclosure. Referring to FIG. 1, a superconducting quantum computer is a device that uses quantum logic for general-purpose computing. Compared with a conventional computer, the superconducting quantum computer is significantly increased in computing efficiency for resolving some specific problems, which has attracted extensive attention. A superconducting quantum chip can achieve large-scale integration by using related semiconductor process technologies. In addition, the superconducting qubit shows better performance than other physical systems in key indicators such as interaction control, selective operation, and error correction that are required for quantum computing, which is one of the most promising platforms for achieving the superconducting quantum computer. The superconducting quantum computer mainly includes a superconducting quantum chip and a hardware system for chip control and measurement. The hardware system mainly includes a signal generator for various microwave frequency bands and devices for various microwave frequency bands, including, but not limited to a filter, an amplifier, an isolator, and the like. The hardware system also includes a dilution refrigerator configured with microwave transmission lines. The superconducting quantum chip in use may execute different quantum algorithms. Quantum state preparation is a fundamental and important step in the design of quantum algorithms. However, in the related art, only the case that ancilla qubits are of exponential order is considered in a quantum state preparation circuit, but there are often no ancilla qubits of exponential order in the preparation of quantum states, so the preparation of quantum states only considering the case that the quantity of ancilla qubits is of exponential order is not suitable for actual application scenarios. In addition, none of the existing quantum state preparation circuits have achieved standard quantum state preparation, which cannot satisfy actual use requirements. Therefore, the embodiments of this disclosure provide a quantum state preparation circuit generating method to obtain a quantum state preparation circuit, and the obtained quantum state preparation circuit may be applied to quantum machine learning or physical system simulation.

The following describes a structure of a quantum state preparation circuit generating apparatus according to an embodiment of this disclosure in detail. The quantum state preparation circuit generating apparatus may be implemented in various forms, such as a superconducting quantum chip with a processing function of the quantum state preparation circuit generating apparatus, or an integrated chip with a processing function of the quantum state preparation circuit generating apparatus, for example, the superconducting quantum chip in FIG. 1. FIG. 2 is a schematic diagram of a composition structure of a quantum state preparation circuit generating apparatus according to an embodiment of this disclosure. It may be understood that, FIG. 2 shows only an exemplary structure rather than a complete structure of the quantum state preparation circuit generating apparatus. The structure shown in FIG. 2 may be partially or entirely implemented as required.

The quantum state preparation circuit generating apparatus provided in this embodiment of this disclosure includes: at least one processor 201, a memory 202, a user interface 203, and at least one network interface 204. The components in the quantum state preparation circuit generating apparatus are coupled by using a bus system 205. It may be understood that the bus system 205 is configured to implement connection and communication between the components. In addition to a data bus, the bus system 205 further includes a power bus, a control bus, and a state signal bus. However, for ease of clear description, all types of buses are marked as the bus system 205 in FIG. 2.

The user interface 203 may include a display, a keyboard, a mouse, a track ball, a click wheel, a key, a button, a touch panel, a touchscreen, or the like.

It may be understood that, the memory 202 may be a volatile memory or a non-volatile memory, or may include both a volatile memory and a non-volatile memory. The memory 202 in this embodiment of this disclosure can store data to support operations in a superconducting quantum chip in an electronic device (such as a terminal device). Examples of the data include: any computer program to be operated on the superconducting quantum chip of the electronic device, for example, an operating system and an application program. The operating system includes various system programs, such as framework layers, kernel library layers, and driver layers, for implementing various basic services and processing hardware-based tasks. The application program may include various application programs. The electronic device provided in this embodiment of this disclosure may be implemented as various types of terminal devices, or may be implemented as a server.

In some embodiments, the quantum state preparation circuit generating apparatus provided in the embodiments of this disclosure may be implemented in the form of a combination of software and hardware. In an example, the quantum state preparation circuit generating apparatus provided in the embodiments of this disclosure may be a processor in the form of a hardware decoding processor, and is programmed to perform the quantum state preparation circuit generating method provided in the embodiments of this disclosure. For example, the processor in the form of a hardware decoding processor may use one or more application specific integrated circuits (ASICs), digital signal processors (DSPs), programmable logic devices (PLDs), complex PLDs (CPLDs), field-programmable gate arrays (FPGAs), or other electronic elements.

In an example in which the quantum state preparation circuit generating apparatus provided in the embodiments of this disclosure is implemented by a combination of software and hardware, the quantum state preparation circuit generating apparatus provided in the embodiments of this disclosure may be directly embodied as a combination of software modules executed by the processor 201. The software modules may be located in a storage medium, and the storage medium is located in the memory 202. The processor 201 reads executable instructions included in the software modules in the memory 202 and uses necessary hardware (for example, including the processor 201 and other components connected to the bus 205) in combination, to implement the quantum state preparation circuit generating method provided in the embodiments of this disclosure.

In an example, the processor 201 may be a superconducting quantum chip having a signal processing capability, for example, a general-purpose processor, a DSP, or another programmable logic device, a discrete or transistor logic device, or a discrete hardware component, where the general-purpose processor may be a microprocessor or any conventional processor.

In an example in which the quantum state preparation circuit generating apparatus provided in the embodiments of this disclosure is implemented by using hardware, the quantum state preparation circuit generating apparatus provided in the embodiments of this disclosure may be implemented directly by using the processor 201 in the form of a hardware decoding processor, for example, the quantum state preparation circuit generating method provided in the embodiments of this disclosure is performed by one or more ASICs, DSPs, PLDs, CPLDs, FPGAs, or other electronic elements.

The memory 202 in this embodiment of this disclosure is configured to store various types of data to support operations of the quantum state preparation circuit generating apparatus. Examples of the data include: any executable instruction to be operated on the quantum state preparation circuit generating apparatus. A program that implements the quantum state preparation circuit generating method of the embodiments of this disclosure may be included in the executable instruction.

In some embodiments, the quantum state preparation circuit generating apparatus provided in the embodiments of this disclosure may be implemented in the form of software. FIG. 2 shows the quantum state preparation circuit generating apparatus stored in the memory 202, which may be software in the form of a program, a plug-in, or the like, and include a series of modules. An example of the program stored in the memory 202 may include the quantum state preparation circuit generating apparatus. The quantum state preparation circuit generating apparatus includes the following software modules: a quantum preparation module 2021 and a quantum transport module 2022. When the software modules in the quantum state preparation circuit generating apparatus are read by the processor 201 into a random access memory (RAM) and executed, the quantum state preparation circuit generating method provided in the embodiments of this disclosure is implemented. The functions of the software modules in the quantum state preparation circuit generating apparatus include: a quantum preparation module 2021, configured to configure an input register including n qubits; a quantum transport module 2022, configured to acquire m ancilla qubits; and the quantum preparation module 2021, further configured to: configure a copy register and a phase register respectively, the copy register including m/2 ancilla qubits, and the phase register including m/2 ancilla qubits; process the qubits through the input register, the copy register, and the phase register, to obtain a diagonal unitary matrix quantum circuit; combine the diagonal unitary matrix quantum circuit and a single bit gate to obtain a uniform control matrix circuit; and combine different uniform control matrix circuits to obtain a quantum state preparation circuit.

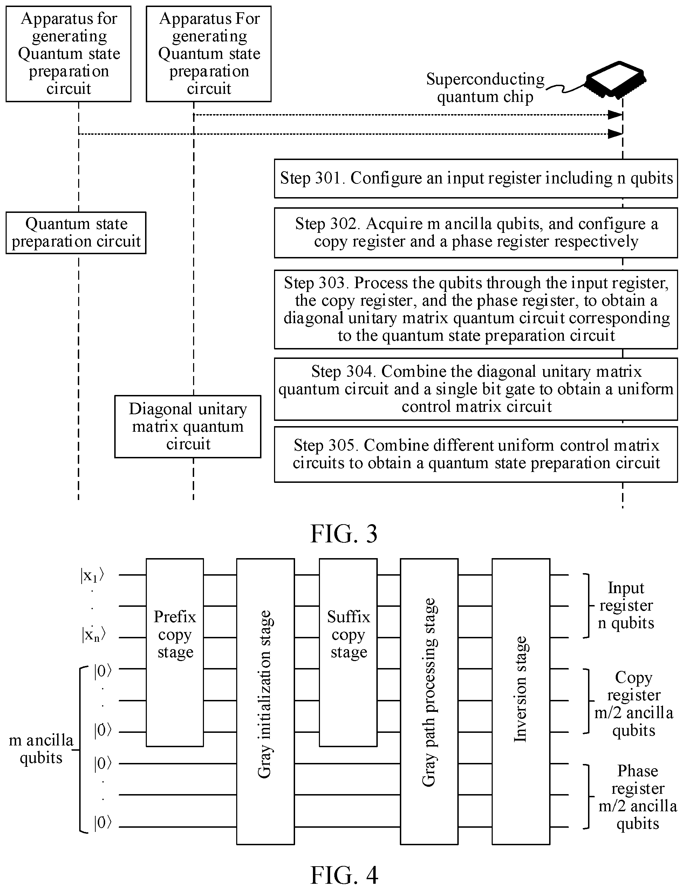

Referring to FIG. 3, FIG. 3 is a schematic diagram of a process of configuring a quantum state preparation circuit according to an embodiment of this disclosure, specifically including the following steps:

Step 301. Configure an input register including n qubits.

Herein, the input register is configured for the quantum state preparation circuit.

Step 302. Acquire m ancilla qubits, and configure a copy register and a phase register respectively.

Herein, the copy register and the phase register are respectively configured for the quantum state preparation circuit. The copy register includes m/2 ancilla qubits, and the phase register includes m/2 ancilla qubits.

Step 303. Process the qubits through the input register, the copy register, and the phase register, to obtain a diagonal unitary matrix quantum circuit corresponding to the quantum state preparation circuit.

Referring to FIG. 4, FIG. 4 is a schematic framework diagram of a unitary matrix quantum circuit of a quantum state preparation circuit according to an embodiment of this application. The m ancilla qubits are initially $|0\rangle$. The first n qubits form the input register, the next m/2 ancilla qubits form the copy register, and the last m/2 ancilla qubits form the phase register. The framework is divided into five stages: a prefix copy stage, a Gray initialization stage, a suffix copy stage, a Gray path processing stage, and an inversion stage. Circuit depths at the five stages are $O(\log m)$, $O(\log m)$, $O(\log m)$, $O(2^n/m)$, and $O(\log m + 2^n/m)$ respectively. The following describes diagonal unitary matrix quantum circuits at different stages respectively.

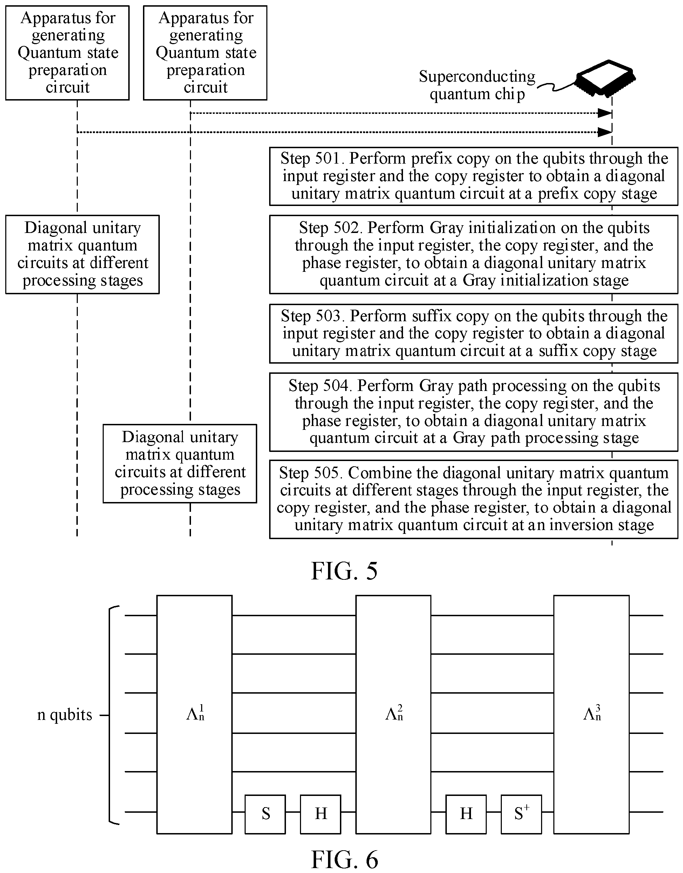

Referring to FIG. 5, FIG. 5 is a schematic diagram of a process of configuring a quantum state preparation circuit according to an embodiment of this disclosure, specifically including the following steps:

Step 501. Perform prefix copy on the qubits through the input register and the copy register to obtain a diagonal unitary matrix quantum circuit at a prefix copy stage.

In some embodiments of this disclosure, the process of determining the diagonal unitary matrix quantum circuit at the prefix copy stage includes: copying each qubit in the input register once through a controlled NOT gate (CNOT gate) in the diagonal unitary matrix quantum circuit at the prefix copy stage, to obtain a first copy result, so as to copy each qubit in the input register to different qubits of the copy register (that is, to copy each qubit in the input register once in the copy register); copying each qubit in the input register and the first copy result in the copy register twice in the copy register through two CNOT gates in the diagonal unitary matrix quantum circuit at the prefix copy stage, to obtain a second copy result; and iteratively copying each qubit in the input register based on the second copy result until each qubit in the input register is copied to m/2t qubits, and determining a circuit depth of the diagonal unitary matrix quantum circuit at the prefix copy stage, t being a quantity of qubits to be copied in the input register. For example, at the prefix copy stage, the first t (let the integer $t = \lfloor \log m \rfloor$) bits $x_1, x_2.....x_t$ in the input register are copied to $m/2t$. Therefore, the implementation of the unitary matrix $U_{\text{copy},1}$ acting on the input register and the copy register may be expressed as formula 1:

$$|x\rangle|0^{m/2}\rangle \xrightarrow{U_{copy,1}} |x\rangle|x_{pre}\rangle \qquad \text{Formula 1}$$

The two symbols $|\cdot\rangle$ respectively represent the input register and the copy register, and satisfy the formula:

$$|x\rangle = |x_1 x_2 \cdots x_n\rangle, |x_{pre}\rangle = |\overbrace{\underbrace{x_1 \cdots x_1}_{\lfloor\frac{m}{2t}\rfloor \atop \text{qubits}} \underbrace{x_2 \cdots x_2}_{\lfloor\frac{m}{2t}\rfloor \atop \text{qubits}} \cdots \underbrace{x_t \cdots x_t}_{\lfloor\frac{m}{2t}\rfloor \atop \text{qubits}} 0 \cdots 0}^{m/2 \text{ qubits}}\rangle.$$

Therefore, when the circuit depth of the diagonal unitary matrix quantum circuit at the prefix copy stage is determined, each $x_i$ is copied once by using the CNOT gate. Each $x_i$ is copied to different qubits of the copy register, so all CNOT gates may be implemented in the circuit with a depth of 1 in parallel. Then, $x_i$ in the input register and $x_i$ in the copy register obtained in the previous step are copied twice in the copy register by using two CNOT gates. The 2t CNOT gates may be implemented in the circuit with a depth of 1 in parallel. This process continues until $m/2t$ copies of $x_1, x_2 ..... x_t$ are obtained in the copy register. Therefore, the circuit depth at the copy stage is $\lceil \log \lfloor m/2t \rfloor \rceil < \log m$, and the diagonal unitary matrix quantum circuit at the prefix copy stage needs to be implemented by using the CNOT circuit $U_{\text{copy},1}$ with a depth of at most $\log m$.

Step 502. Perform Gray initialization on the qubits through the input register, the copy register, and the phase register, to obtain a diagonal unitary matrix quantum circuit at a Gray initialization stage.

In some embodiments of this disclosure, the performing Gray initialization on the qubits through the input register, the copy register, and the phase register, to obtain a diagonal unitary matrix quantum circuit at a Gray initialization stage may be implemented through the following manners: determining a first target linear function matching the phase register and a quantity of the first target linear function; copying qubits in the input register and qubits in the copy register into the phase register through a CNOT gate in the diagonal unitary matrix quantum circuit at the Gray initialization stage; executing the first target linear function at a target position of the phase register; determining, when a target quantum state is achieved on each qubit of the phase register by executing the first target linear function, a first circuit depth of the diagonal unitary matrix quantum circuit at the Gray initialization stage; performing phase rotation on qubits in the phase register; determining, when a target rotation gate is achieved to act on a target qubit in the phase register, a second circuit depth of the diagonal unitary matrix quantum circuit at the Gray initialization stage; and determining a circuit depth of the diagonal unitary matrix quantum circuit at the Gray initialization stage based on a sum of the first circuit depth of the diagonal unitary matrix quantum circuit at the Gray initialization stage and the second circuit depth of the diagonal unitary matrix quantum circuit at the Gray initialization stage. For example, at the Gray initialization stage, the circuit is implemented through two steps. In step $U_1$, $m/2$ linear functions $f_{j1}(x) = \langle s(j, 1), 1 \rangle$ are implemented. $s(j, 1)$ is n bit strings, and the subscript j represents that the linear function is implemented in the $j^{th}$ bit of the phase register. In the second step, phase rotation is implemented in the phase register. Any $n$ bit strings are divided into two parts. The first t bits are the prefix, and the last (n-t) bits are the suffix. Let the prefix of the set $\{s(j, 1): j \in [\ell]\}$ cover all $\ell$ prefixes, and for each fixed $j \in [\ell]$, let the suffix of the set $\{s(j, k): k \in [2^n/\ell]\}$ cover all possible suffixes. Therefore, $\{s(j, k): j \in [\ell], k \in [2^n/\ell]\}$ satisfies the condition that "all the last $(n - t)$ bits of the bit string in the set $\{s(j, 1): j \in [\ell]\}$ are 0, and the first t bits of the bit string in each row $\{s(j, k): k \in [2^n/\ell]\}$ of the set are the same".

For the $j^{th}$ set $\left\{ s(j,k): j \in [\ell], k \in \left[ \frac{2^n}{\ell} \right] \right\}$, let the suffix of $(n - t)$-bit is $(j', n - t)$-Gray code, where $j' = ((j - 1) \bmod (n - t)) + 1 \in [n - t]$. For any $k \in \left[ \frac{2^n}{\ell} - 1 \right]$ and any $t' \in \{t + 1, \cdots, n\}$, the following describes a quantity of the integer $j$ that satisfies $s(j, k)$ and $s(j, k + 1)$ that differ only in the $t'^{th}$ bit. After the integer $j$ traverses the set n-t, there is exactly one integer $j$ that satisfies $s(j, k)$ and $s(j, k + 1)$ that differ only in the $t'^{th}$ bit.

After the integer j traverses the set $\{n - t + 1, ... , 2(n - t)\}$, there is also exactly one integer j that satisfies $s(j, k)$ and $s(j, k + 1)$ that differ only in the $t'^{th}$ bit. It can be learned by repeating this process that after the integer j traverses the set $[\ell]$, there is at most $\left\lceil \frac{\ell}{n-t} \right\rceil \leq \frac{m}{2(n-t)} + 1$ integers j that satisfy $s(j, k)$ and $s(j, k + 1)$ that differ only in the $t'^{th}$ bit.

Assuming that $t_{jk}$ represents the subscript of the bit where $s(j, k)$ and $s(j, k + 1)$ differ from each other, after step 502 is performed, the quantum state $|f_{j1}(x)\rangle$ is implemented on each bit j of the phase register, where $f_{j,1}(x) = \langle s(j, 1), x \rangle$.

The rotation gate $R_{j,1} \overset{\text{def}}{=} R(\alpha_{s(j,1)})$ is applied to the $j^{th}$ qubit of the phase register. If $\langle s(j, 1), x \rangle = 1$, then the phase of the $j^{th}$ qubit rotates by $\alpha_{s(j,1)}$; otherwise, the phase remains unchanged. Define $R_1 = R(\alpha_{s(j,1)})$.

When the circuit depth is determined, the state of $2^t$ qubits in the phase register is converted to $\{a_1 x_1 \oplus a_2 x_2 \oplus \cdots \oplus a_t x_t : a_1, ..., a_t \in \{0,1\}\}$. That is, this process converts the $j^{th}$ qubit in the phase register to $|f_{j,1}(x)\rangle$. In the second step, the phase $f_{j,1}(x) \cdot \alpha_{s(j,1)}$ is added for $|x\rangle|x_{\text{pre}}\rangle|0^{m/2}\rangle$. Therefore, formula 2 can be obtained as follows:

$$|x\rangle |x_{\text{pre}}\rangle |0^{m/2}\rangle \xrightarrow{U_1} |x\rangle |x_{pre}\rangle |f_{[\ell],11}\rangle$$

$$\xrightarrow{R_1} e^{i \sum_{j \in [\ell]} f_{j,1}(x) \alpha_{s(j,k)}} |x\rangle |x_{pre}\rangle |f_{[\ell],1}\rangle \qquad \text{Formula 2}$$

This application describes a shallow quantum circuit for implementing the first step U1 as follows. Because a linear function with variables $x_1, x_2.....x_t$ is to be implemented on each qubit $j$, a total quantity of the linear function is $\ell = 2^t$. $\ell \le m / 2$, so the bits in the phase register are sufficient to implement all I functions. For the linear function $x_{i1}, \oplus.....\oplus x_{it}$ corresponding to the qubit j in the phase register, $x_{i1}, x_{i2}.....x_{it}$ is copied from the input register and the copy register to the qubit j by using the CNOT gate. It is only necessary to allocate the positions of these CNOT gates properly to reduce the depth of the quantum circuit. The first step may be divided into $\left\lceil \frac{2^t}{t\lfloor m/(2t)\rfloor} \right\rceil$ sub-steps. In each sub-step, $t\lfloor m/(2t)\rfloor$ qubits j are converted to the quantum state $|\langle s(j, 1), x\rangle\rangle$. Because there are a total of $\ell = 2^t$ qubits to be processed, there are a total of $\left\lceil \frac{2^t}{t\lfloor m/(2t)\rfloor} \right\rceil$ sub-steps.

When the position where the bit string $s(j, 1)$ is 1 is $i \in [t]$, that is, $s(j, 1)_i = 1$, $x_i$ is copied to the qubit j by using the CNOT gate. In this case, each of t variables $x_1, x_2.....x_t$ has $\lfloor m / 2t \rfloor$ copies. To use these copies for parallel circuit design, $t\lfloor m / 2t \rfloor$ qubits $j$ in the phase register are divided into t blocks, and each block is $\lfloor m / 2t \rfloor$ in size. In each sub-step, by using the circuit with a depth t, all variables required for $t\left\lfloor \frac{m}{2t}+1 \right\rfloor$ qubits $j$ in the phase register may be copied into the qubit. In the first layer, the qubit corresponding to $\lfloor m / 2t \rfloor$ copies of $x_1$ is used as a control bit of the CNOT gate, and $x_1$ is copied into the qubit in the first block; the qubit corresponding to $\lfloor m / 2t \rfloor$ copies of $x_2$ is used as a control bit of the CNOT gate, and $x_2$ is copied into the qubit in the second block; and so on, the qubit corresponding to $\lfloor m / 2t \rfloor$ copies of $x_t$ is used as a control bit of the CNOT gate, and $x_t$ is copied into the qubit in the $t^{th}$ block. In the second layer, the blocks are cyclically shifted, and then the process in the first layer is repeated: copying $x_1$ into the second block, copying $x_2$ into the third block, ......, copying $x_{t-1}$ into the $t^{th}$ block, and copying $x_t$ into the first block. In this case, $U_1$ can be implemented in a t-layer quantum circuit, so that all $t\lfloor m / 2t \rfloor$ qubits in the phase register obtain the copies of the variables required.

This step includes a total of $\left\lceil \frac{2^t}{t\lfloor m/(2t)\rfloor} \right\rceil$ sub-steps, and the depth of each sub-step is t, so a total depth is:

$$\left\lceil \frac{2^t}{t\lfloor m/(2t)\rfloor} \right\rceil \cdot t \le \frac{\frac{m}{2}}{\frac{m}{2t}} + t = 2t \le 2\left\lceil \log\left(\frac{m}{2}\right) \right\rceil < 2\log m - 2.$$

For the second step, all rotation gates do not act on the same qubit, so these rotation gates may be placed in the same layer of circuit, that is, the circuit depth is 1. Based on the above, the circuit depth at the Gray initialization stage is no more than 2logm.

Step 503. Perform suffix copy on the qubits through the input register and the copy register to obtain a diagonal unitary matrix quantum circuit at a suffix copy stage.

In some embodiments of this disclosure, the performing suffix copy on the qubits through the input register and the copy register to obtain a diagonal unitary matrix quantum circuit at a suffix copy stage may be implemented through the following manners: restoring the qubits obtained through the prefix copy; copying each qubit in the input register to m/(2(n-t)) qubits into the copy register; adding the m/(2(n-t)) copied qubits into suffixes of the restored qubits; and determining, when a suffix of each restored qubit is the m/(2(n-t)) copied qubits, a circuit depth of the diagonal unitary matrix quantum circuit at the suffix copy stage.

The quantum state obtained at the prefix copy stage is first restored, $\lfloor m/2(n-t) \rfloor$ copies of each suffix variable $x_{t+1}, x_{t+2}, ..., x_n$ are then implemented on each qubit, and each variable $x_{t+1}, ..., x_n$ in the input register is copied

to $\left\lfloor \dfrac{m}{2(n-t)} \right\rfloor$ into the copy register, which requires the action of the CNOT circuit $U_{\text{copy, 2}}$ with a depth of at most logm on $|x\rangle 0^{m/2}\rangle$.

$$|x_{suf}\rangle \overset{\text{def}}{=} |\overbrace{\underbrace{x_{t+1} \cdots x_{t+1}}_{\substack{\left\lfloor \frac{m}{2(n-t)} \right\rfloor \\ \text{qubits}}} \underbrace{x_{t+2} \cdots x_{t+2}}_{\substack{\left\lfloor \frac{m}{2(n-t)} \right\rfloor \\ \text{qubits}}} \cdots \underbrace{x_n \cdots x_n}_{\substack{\left\lfloor \frac{m}{2(n-t)} \right\rfloor \\ \text{qubits}}} 0 \cdots 0}^{m/2 \text{ qubits}} \rangle .$$

The effect achieved by $U_{\text{copy, 2}}$ is as follows:

$$|x\rangle|0^{m/2}\rangle \xrightarrow{U_{copy,2}} |x\rangle|x_{suf}\rangle.$$

The operator at the suffix copy stage is $U_{\text{copy,}} {}_2 U_{\text{copy, 1}}^{+}$ with a depth of at most 2logm. Therefore, the effect of the operator $U_{\text{copy,}} {}_2 U_{\text{copy, 1}}^{+}$ at this stage is shown in formula 3:

$$\left|x\right\rangle x_{\text{pre}}\rangle \xrightarrow{U_{\text{copy, 1}}^{+}} \left|x\right\rangle 0^{m/2}\rangle \xrightarrow{U_{\text{copy, 2}}^{+}} \left|x\right\rangle x_{suf}\rangle \quad \text{Formula 3}$$

Step 504. Perform Gray path processing on the qubits through the input register, the copy register, and the phase register, to obtain a diagonal unitary matrix quantum circuit at a Gray path processing stage.

In some embodiments of this disclosure, the performing Gray path processing on the qubits through the input register, the copy register, and the phase register, to obtain a diagonal unitary matrix quantum circuit at a Gray path processing stage may be implemented through the following manners: determining a second target linear function matching the phase register and a quantity of the second target linear function; copying qubits in the input register and qubits in the copy register into the phase register through a CNOT gate in the diagonal unitary matrix quantum circuit at the Gray path processing stage; executing the second target linear function at a target position of the phase register; determining, when a target quantum state is achieved on each qubit of the phase register by executing the second target linear function, a first circuit depth of the diagonal unitary matrix quantum circuit at the Gray path processing stage; performing phase rotation on qubits in the phase register; determining, when a target rotation gate is achieved to act on a target qubit in the phase register, a second circuit depth of the diagonal unitary matrix quantum circuit at the Gray path processing stage; and determining a circuit depth of the diagonal unitary matrix quantum circuit at the Gray path processing stage based on a sum of the first circuit depth of the diagonal unitary matrix quantum circuit at the Gray path processing stage and the second circuit depth of the diagonal unitary matrix quantum circuit at the Gray path processing stage.

At the Gray path processing stage, for the transformation implemented at the $k^{\text{th}}$ stage, refer to formula 4:

$$\left|x\right\rangle x_{suf}\rangle f_{[\ell],k-1}\rangle \xrightarrow{U_k} \left|x\right\rangle x_{suf}\rangle f_{[\ell],k}\rangle \xrightarrow{R_k} e^{i \sum_{j\in[\ell]} f_{j,k}(x)\alpha_{s(j,k)}} |x\rangle xsuf\rangle f_{[\ell],k}\rangle \quad \text{Formula 4}$$

$|f_{[\ell],k-1}\rangle = \otimes_{j\in[\ell]} |f_{j,k(x)}\rangle$ and $|f_{[\ell],k}\rangle = \otimes_{j\in[\ell]} |f_{j,k(x)}\rangle$. The circuit depth at the Gray path processing stage is at most $2 \cdot 2^n / \ell$.

The path copying stage is executed $2^n/\ell - 1$ times in total. s(j,k) and s(j,k+1) differ by only one bit, so a CNOT gate may convert $|\langle s(j,k), x\rangle\rangle$ at the previous stage to $|\langle s(j, k + 1), x\rangle\rangle$. For the CNOT gate, the control bit is $x_{tjk}$, and the target bit is the $j^{th}$ qubit of the phase register. Each variable $x_i$ is used as a control bit of at most $\left(\left\lceil\frac{m}{2(n-t)}\right\rceil + 1\right)$ different qubits $j \in [\ell]$. The input register and the copy register include $\left(\left\lceil\frac{m}{2(n-t)}\right\rceil + 1\right)$ copies of $x_i$, so the CNOT gate in the above step may be implemented in the circuit with a depth of at most 1. The above processing only includes single bit gates acting on different qubits, so this step may be implemented in one layer of circuit in parallel. Therefore, the Gray path processing stage may be implemented in a circuit with a depth of at most $(2^n/\ell) \cdot (1 + 1) \leq 2 \cdot 2^n/\ell$.

Step 505. Combine the diagonal unitary matrix quantum circuits at different stages through the input register, the copy register, and the phase register, to obtain a diagonal unitary matrix quantum circuit at an inversion stage.

In some embodiments of this disclosure, the combining the diagonal unitary matrix quantum circuits at different stages through the input register, the copy register, and the phase register, to obtain a diagonal unitary matrix quantum circuit at an inversion stage may be implemented through the following manners: determining the diagonal unitary matrix quantum circuit at the inversion stage through a combination of the diagonal unitary matrix quantum circuit at the prefix copy stage, the diagonal unitary matrix quantum circuit at the Gray initialization stage, the diagonal unitary matrix quantum circuit at the suffix copy stage, and the diagonal unitary matrix quantum circuit at the Gray path processing stage, a circuit depth of the diagonal unitary matrix quantum circuit at the inversion stage being $O(\log m+2^n/m)$.

Herein, when the diagonal unitary matrix quantum circuit at the prefix copy stage, the diagonal unitary matrix quantum circuit at the Gray initialization stage, the diagonal unitary matrix quantum circuit at the suffix copy stage, and the diagonal unitary matrix quantum circuit at the Gray path processing stage are determined through the input register, the copy register, and the phase register, the diagonal unitary matrix quantum circuit at the inversion stage is determined through the combination of the diagonal unitary matrix quantum circuit at the prefix copy stage, the diagonal unitary matrix quantum circuit at the Gray initialization stage, the diagonal unitary matrix quantum circuit at the suffix copy stage, and the diagonal unitary matrix quantum circuit at the Gray path processing stage. The circuit $U_{inverse}$ at the inversion stage has a circuit depth of $O(\log m+2^n/m)$ and implements the following transformation:

$$\left|x\right\rangle x_{suf}\right\rangle f_{[\ell],2^n/\ell}\right\rangle \xrightarrow{U_{ineverse}} \left|x\right\rangle x_{suf}\right\rangle f_{[\ell],k}\right\rangle \xrightarrow{R_k} \left|x\right\rangle 0^{m/2}\right\rangle 0^{m/2}\right\rangle$$

The circuit depth at the inversion stage is a sum of CNOT circuit depths at the previous four stages (the prefix copy stage, the Gray initialization stage, the suffix copy stage, and the Gray path processing stage), that is:

$$O(\log m+2\log m+2\cdot 2^n/m)=O(\log m+\frac{2^n}{m})$$

The transformation implemented at the inversion stage is as follows:

$$\left|x\right\rangle x_{suf}\right\rangle\left|f_{[\ell],2^{n/\ell}}\right\rangle \xrightarrow{U_2^+...U_{2^{n/\ell}}^+} \left|x\right\rangle x_{suf}\right\rangle f_{[\ell],1}\right\rangle$$

$$\xrightarrow{U_{copy,1}...U_{copy,2}} \left|x\right\rangle x_{pre}\right\rangle f_{[\ell],1}\right\rangle$$

$$\xrightarrow{U_1} \left|x\right\rangle x_{pre}\right\rangle 0^{m/2}\right\rangle$$

$$\xrightarrow{U_{copy,1}} \left|x\right\rangle 0^{m/2}\right\rangle\left|0^{m/2}\right\rangle$$

After the diagonal unitary matrix quantum circuit at each stage in the quantum state preparation circuit shown in FIG. 4 is determined, step 304 is performed.

Step 304. Combine the diagonal unitary matrix quantum circuit and a single bit gate to obtain a uniform control matrix circuit.

Step 305. Combine different uniform control matrix circuits to obtain a quantum state preparation circuit.

In some embodiments of this disclosure, the combining the diagonal unitary matrix quantum circuit and a single bit gate to obtain a uniform control matrix circuit may be implemented through the following manners: combining the diagonal unitary matrix quantum circuit at the prefix copy stage, the diagonal unitary matrix quantum circuit at the Gray initialization stage, the diagonal unitary matrix quantum circuit at the suffix copy stage, the diagonal unitary matrix quantum circuit at the Gray path processing stage, the diagonal unitary matrix quantum circuit at the inversion stage, and the single bit gate, to obtain the uniform control matrix circuit.

In some embodiments of this disclosure, the designed quantum state preparation circuit may also be verified, for example, including: determining a circuit depth of the quantum state preparation circuit; detecting the circuit depth of the quantum state preparation circuit through a target diagonal unitary matrix; and preparing, when it is detected that the circuit depth of the quantum state preparation circuit is able to achieve the target diagonal unitary matrix, any quantum state through the quantum state preparation circuit.

For example, given $m$ ancilla qubits ($2n \leq m \leq 2^{n+1}$), $\Lambda_n$ may be implemented by the quantum circuit with a depth of $O(\log m + 2^n/m)$. When $m \geq 2^{n+1}$, only $2^{n+1}$ ancilla qubits are used, then the circuit depth is $O(n)$. Combining the above two cases, for any ancilla qubit $m(\geq 2n)$, the circuit depth of the diagonal unitary matrix is $O(n + 2^n/m)$.

FIG. 6 is a schematic structural diagram of a uniform control matrix circuit according to an embodiment of this disclosure. As shown in FIG. 6, in the circuit framework of the n bit uniform control matrix $V_n$, all $\Lambda_n^1$, $\Lambda_n^2$, $\Lambda_n^3$ are an n qubit diagonal unitary matrix. Let $D(n)$ represent that the quantity of the ancilla qubits is m to implement the quantum circuit depth of the n qubit diagonal unitary matrix (omitting a global phase). H and $S(S^+)$ may be merged into a single bit gate. The global phase of $V_1$, $V_2$,..., $V_n$ may be implemented by only one single bit phase gate. The circuit depth of any $n$ bit quantum state preparation circuit is:

$$\sum_{j=1}^{n} (3D(j) + 2) + 1 = 3\sum_{j=1}^{n} D(j) + 2n + 1. \qquad (1.)$$

When the diagonal unitary matrix quantum circuit and the single bit gate are combined to obtain the uniform control matrix circuit, the diagonal unitary matrix quantum circuit at the prefix copy stage, the diagonal unitary matrix quantum circuit at the Gray initialization stage, the diagonal unitary matrix quantum circuit at the suffix copy stage, the diagonal unitary matrix quantum circuit at the Gray path processing stage, the diagonal unitary matrix quantum circuit at the inversion stage, and the single bit gate are combined to obtain the uniform control matrix circuit.

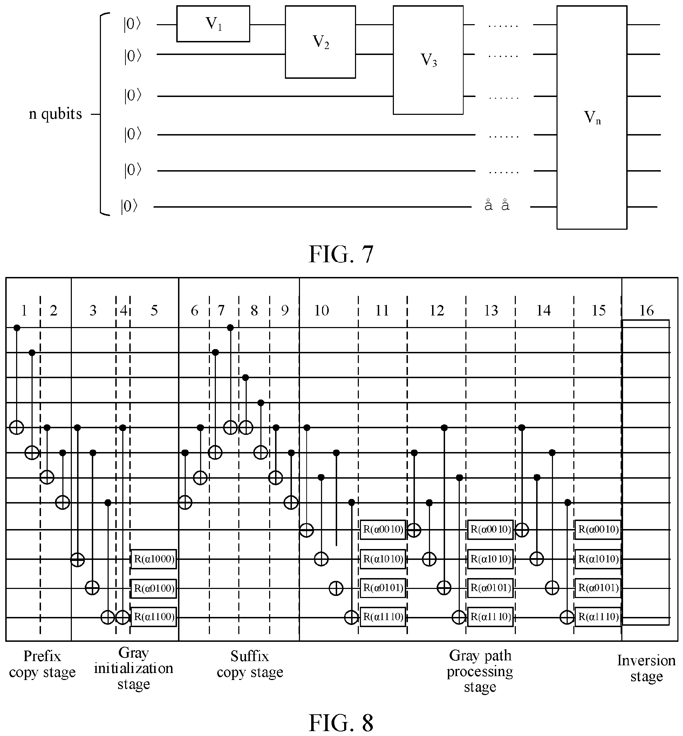

FIG. 7 is a schematic structural diagram of a quantum state preparation circuit according to an embodiment of this disclosure. As shown in FIG. 7, an initial state of the circuit is $|0\rangle^{\otimes n}$. Any $k \in [n]V_k$ represents a uniformly controlled gate (UCG) of k qubits. The n qubit UCG $V_n$ is defined as:

$$V_n = \begin{bmatrix} U_1 & & & \\ & U_2 & & \\ & & \ddots & \\ & & & U_{2^{n-1}} \end{bmatrix} \in \mathbb{C}^{2^n \times 2^n}, \qquad (2.)$$

For any $k \in [2^{n-1}]$, $U_k \in \mathbb{C}^{2 \times 2}$ is a unitary matrix.

The diagonal sub-matrix of the UCG $V_n$ of any $n$ qubits may be decomposed as follows:

$$U_k = e^{i\alpha_k} R_z(\beta_k) SHR_z(\gamma_k) HS^\dagger R_z(\delta_k), \qquad \alpha_k, \beta_k, \gamma_k, \delta_k \in \mathbb{R}, k \in [2^{n-1}].$$

Therefore, the uniform control matrix $V_n$ may be decomposed into the following form:

$$V_n = \begin{bmatrix} e^{i\alpha_1} & & & & \\ & e^{i\alpha_1} & & & \\ & & \ddots & & \\ & & & e^{i\alpha_{2^{n-1}}} & \\ & & & & e^{i\alpha_{2^{n-1}}} \end{bmatrix} \cdot \begin{bmatrix} R_z(\beta_1) & & \\ & \ddots & \\ & & R_z(\beta_{2^{n-1}}) \end{bmatrix} \cdot \mathbb{I}_{n-1} \otimes (SH)$$

$$\cdot \begin{bmatrix} R_z(\gamma_1) & & \\ & \ddots & \\ & & R_z(\gamma_{2^{n-1}}) \end{bmatrix} \cdot \mathbb{I}_{n-1} \otimes (HS^\dagger) \cdot \begin{bmatrix} R_z(\delta_1) & & \\ & \ddots & \\ & & R_z(\delta_{2^{n-1}}) \end{bmatrix},$$

$\mathbb{I}_{n-1}$ represents the unit operator of $n$ - 1 qubits. The $n$ qubit diagonal unitary matrix is defined as follows:

$$\Lambda_n = \begin{bmatrix} 1 & & & \\ & e^{i\theta_1} & & \\ & & \ddots & \\ & & & e^{i\theta_{2^n-1}} \end{bmatrix} \in \mathbb{C}^{2^n \times 2^n}. \tag{3.}$$

Therefore, with reference to FIG. 4 and FIG. 6, different uniform control matrix circuits are combined to obtain the quantum state preparation circuit. In addition, given $m$ ancilla qubits ($2n \leq m \leq 2^{n+1}$), $\Lambda_n$ may be implemented by the quantum circuit with a depth of O(log$m$ + $2^n/m$). When m $\geq 2^{n+1}$, only $2^{n+1}$ ancilla qubits are used, then the circuit depth is O($n$). Combining the above two cases, for any ancilla qubit $m(\geq 2n)$, the circuit depth of the diagonal unitary matrix is O($n$ + $2^n/m$). Therefore, it can be determined that the circuit depth of quantum state preparation is O($n^2$ + $2^n/m$) when the quantity of the ancilla qubits is $m(\geq 2n)$. As a result, when the quantity of the ancilla qubits is $m \in [2n, O(2^n/n^2)]$, the circuit depth of the quantum state preparation circuit generated by using the quantum state preparation circuit generating method provided in this application is O($2^n/m$). In this case, the lower bound of the circuit depth is $\Omega(2^n/m)$. The upper bound and the lower bound of the circuit depth match (that is, equal in asymptotic cases), so the circuit depth of the quantum state preparation circuit generated by the quantum state preparation circuit generating method provided in this application is optimal. The use of the generated quantum state preparation circuit can effectively reduce the effects of quantum decay.

To better describe the quantum state preparation circuit generating method provided in this application, refer to FIG. 8. FIG. 8 is a schematic framework diagram of a unitary matrix quantum circuit of a quantum state preparation circuit according to an embodiment of this disclosure. The following continues the description by using n=8, m=4 as an example. The quantum circuit of the diagonal unitary matrix $\Lambda_4$ with eight ancilla qubits is implemented. The last eight qubits are ancilla qubits with an initial state of 10). The first four qubits form the input register, the next eight qubits form the copy register, and the last four qubits form the phase register. The framework is divided into five stages: a prefix copy stage, a Gray initialization stage, a suffix copy stage, a Gray path processing stage, and an inversion stage. Circuit depths at the five stages are 2, 3, 4, 6, and 11 respectively, which are described respectively as follows.

At the prefix copy stage, the circuit implements copy of the prefix $x_1 x_2$ twice on the copy register, that is, implementing the following transformation:

$$|x_1 x_2 x_3 x_4\rangle |0^8\rangle \rightarrow |x_1 x_2 x_3 x_4\rangle |x_1 x_2 x_1 x_2\rangle |0^4\rangle.$$

Therefore, the circuit depth at the prefix copy stage is 2.

At the Gray initialization stage, the quantum state preparation circuit first implements the linear functions with the suffix of 00 respectively on four bits of the phase register by using the copy of the prefix in the copy register, that is, implementing the functions $\langle 0000, x \rangle$, $\langle 1000, x \rangle$, $\langle 0100, x \rangle$, $\langle 0100, x \rangle$; and then adds a corresponding phase for each function. That is, the following transformation is implemented:

$$|x_1 x_2 x_3 x_4\rangle |x_1 x_2 x_1 x_2\rangle |0^4\rangle$$
$$\rightarrow |x_1 x_2 x_3 x_4\rangle |x_1 x_2 x_1 x_2\rangle |\langle 0000, x\rangle, \langle 1000, x\rangle, \langle 0100, x\rangle, \langle 0100, x\rangle\rangle$$
$$\rightarrow e^{i\sum_{s\in\{0,1\}^2}\langle s00, x\rangle\alpha_{s00}} |x_1 x_2 x_3 x_4\rangle |x_1 x_2 x_1 x_2\rangle |\langle 0000, x\rangle, \langle 1000, x\rangle, \langle 0100, x\rangle, \langle 0100, x\rangle\rangle.$$

Therefore, the circuit depth at the Gray initialization stage is 3.

At the suffix copy stage, the copy register is first restored to the initial state $|0^4\rangle$, and the copy of the prefix $x_3 x_4$ is implemented twice on the copy register. That is, the following transformation is implemented:

$$e^{i\sum_{s\in\{0,1\}^2\langle s00,x\rangle\alpha_{s00}}}|x_1 x_2 x_3 x_4\rangle|x_1 x_2 x_1 x_2\rangle|\langle 0000, x\rangle, \langle 1000, x\rangle, \langle 0100, x\rangle, \langle 0100, x\rangle\rangle$$

$$\rightarrow e^{i\sum_{s\in\{0,1\}^2\langle s00,x\rangle\alpha_{s00}}}|x_1 x_2 x_3 x_4\rangle|0^4\rangle|\langle 0000, x\rangle, \langle 1000, x\rangle, \langle 0100, x\rangle, \langle 0100, x\rangle\rangle$$

$$\rightarrow e^{i\sum_{s\in\{0,1\}^2\langle s00,x\rangle\alpha_{s00}}}|x_1 x_2 x_3 x_4\rangle|x_3 x_4 x_3 x_4\rangle|\langle 0000, x\rangle, \langle 1000, x\rangle, \langle 0100, x\rangle, \langle 0100, x\rangle\rangle.$$

Therefore, the circuit depth at the suffix copy stage is 4.

After the suffix copy stage is complete, all functions with the suffix of 00 have been implemented. Next, for different prefixes, the circuit will generate all suffixes. To better implement this process in parallel, at the Gray path processing stage, the order of suffix generation is the order of Gray code. 1-Gray code and 2-Gray code are respectively 00, 10, 11, 01 and 00, 01, 11, 10. In the phase register, the 1-Gray code is implemented at the first two qubits, and the 2-Gray code is implemented at the last two qubits. Each time a suffix is implemented, a corresponding phase needs to be added using a rotation gate. As a result, the Gray path processing stage implements the following transformation:

$$e^{i\sum_{s\in\{0,1\}^2\langle s00,x\rangle\alpha_{s00}}}|x_1 x_2 x_3 x_4\rangle|x_1 x_2 x_1 x_2\rangle|\langle 0000, x\rangle, \langle 1000, x\rangle, \langle 0100, x\rangle, \langle 0100, x\rangle\rangle$$

$$\rightarrow e^{i\sum_{s\in\{0,1\}^4-\{0^4\}\langle s,x\rangle\alpha_s}}|x_1 x_2 x_3 x_4\rangle|x_1 x_2 x_1 x_2\rangle|\langle 0001, x\rangle, \langle 1001, x\rangle, \langle 0110, x\rangle, \langle 1110, x\rangle\rangle$$

$$\rightarrow e^{i\theta(x)}|x_1 x_2 x_3 x_4\rangle|x_1 x_2 x_1 x_2\rangle|\langle 0001, x\rangle, \langle 1001, x\rangle, \langle 0110, x\rangle, \langle 1110, x\rangle\rangle.$$

Therefore, the circuit depth at the Gray path processing stage is 6.

Finally, the inversion stage is to restore the qubits in the copy register and the qubits in the phase register to the initial state 10). The inversion stage (step 16) consists of the inverse circuits of steps 14, 12, 10, 9, 8, 7, 6, 4, 3, 2, and 1 arranged in order. From this, it can be verified that the inversion stage implements the following transformation:

$$e^{i\theta(x)}|x_1 x_2 x_3 x_4\rangle|x_1 x_2 x_1 x_2\rangle|\langle 0001, x\rangle, \langle 1001, x\rangle, \langle 0110, x\rangle, \langle 1110, x\rangle\rangle \rightarrow e^{i\theta(x)}|x\rangle|0^4\rangle|0^4\rangle.$$

The circuit depth at the inversion stage is 11.

The circuit in FIG. 8 implements the following transformation $|x\rangle 0^8\rangle \rightarrow e^{i\theta(x)}|x\rangle|0^8\rangle = \Lambda_4|x\rangle|0^8\rangle$, so the circuit in FIG. 6 is the circuit implementation of the diagonal unitary matrix $\Lambda_4$.

The following continues to describe an exemplary structure in which a quantum state preparation circuit generating apparatus provided in an embodiment of this disclosure is implemented as a software module. In some embodiments, as shown in FIG. 2, the software module in the quantum state preparation circuit generating apparatus stored in the memory 202 may include: a quantum preparation module 2021, configured to configure an input register including n qubits; a quantum transport module 2022, configured to acquire m ancilla qubits; and the quantum preparation module 2021, further configured to: configure a copy register and a phase register respectively, the copy register including m/2 ancilla qubits, and the phase register including m/2 ancilla qubits; process the qubits through the input register, the copy register, and the phase register, to obtain a diagonal unitary matrix quantum circuit; combine the diagonal unitary matrix quantum circuit and a single bit gate to obtain a uniform control matrix circuit; and combine different uniform control matrix circuits to obtain a quantum state preparation circuit.

In some embodiments, the quantum preparation module 2021 is further configured to: perform prefix copy on the qubits through the input register and the copy register to obtain a diagonal unitary matrix quantum circuit at a prefix copy stage; perform Gray initialization on the qubits through the input register, the copy register, and the phase register, to obtain a diagonal unitary matrix quantum circuit at a Gray initialization stage; perform suffix copy on the qubits through the input register and the copy register to obtain a diagonal unitary matrix quantum circuit at a suffix copy stage; perform Gray path processing on the qubits through the input register, the copy register, and the phase register, to obtain a diagonal unitary matrix quantum circuit at a Gray path processing stage; and combine the diagonal unitary matrix quantum circuits at different stages through the input register, the copy register, and the phase register, to obtain a diagonal unitary matrix quantum circuit at an inversion stage.

In some embodiments, the quantum preparation module 2021 is further configured to: copy each qubit in the input register once in the copy register through a controlled NOT gate (CNOT gate) in the diagonal unitary matrix quantum circuit at the prefix copy stage, to obtain a first copy result; copy each qubit in the input register and the first copy result in the copy register twice in the copy register through two CNOT gates in the diagonal unitary matrix quantum circuit at the prefix copy stage, to obtain a second copy result; and iteratively copy each qubit in the input register based on the second copy result until each qubit in the input register is copied to m/2t qubits, and determine a circuit depth of the diagonal unitary matrix quantum circuit at the prefix copy stage, t being a quantity of qubits to be copied in the input register.

In some embodiments, the quantum preparation module 2021 is further configured to: determine a first target linear function matching the phase register and a quantity of the first target linear function; copy qubits in the input register and qubits in the copy register into the phase register through a CNOT gate in the diagonal unitary matrix quantum circuit at the Gray initialization stage; execute the first target linear function at a target position of the phase register; determine, when a target quantum state is achieved on each qubit of the phase register by executing the first target linear function, a first circuit depth of the diagonal unitary matrix quantum circuit at the Gray initialization stage; perform phase rotation on qubits in the phase register; determine, when a target rotation gate is achieved to act on a target qubit in the phase register, a second circuit depth of the diagonal unitary matrix quantum circuit at the Gray initialization stage; and determine a circuit depth of the diagonal unitary matrix quantum circuit at the Gray initialization stage based on a sum of the first circuit depth of the diagonal unitary matrix quantum circuit at the Gray initialization stage and the second circuit depth of the diagonal unitary matrix quantum circuit at the Gray initialization stage.

In some embodiments, the quantum preparation module 2021 is further configured to: restore the qubits obtained through the prefix copy; copy each qubit in the input register to m/(2(n-t)) qubits into the copy register; add the m/(2(n-t)) copied qubits into suffixes of the restored qubits; and determine, when a suffix of each restored qubit is the m/(2(n-t)) copied qubits, a circuit depth of the diagonal unitary matrix quantum circuit at the suffix copy stage.

In some embodiments, the quantum preparation module 2021 is further configured to: determine a second target linear function matching the phase register and a quantity of the second target linear function; copy qubits in the input register and qubits in the copy register into the phase register through a CNOT gate in the diagonal unitary matrix quantum circuit at the Gray path processing stage; execute the second target linear function at a target position of the phase register; determine, when a target quantum state is achieved on each qubit of the phase register by executing the second target linear function, a first circuit depth of the diagonal unitary matrix quantum circuit at the Gray path processing stage; perform phase rotation on qubits in the phase register; determine, when a target rotation gate is achieved to act on a target qubit in the phase register, a second circuit depth of the diagonal unitary matrix quantum circuit at the Gray path processing stage; and determine a circuit depth of the diagonal unitary matrix quantum circuit at the Gray path processing stage based on a sum of the first circuit depth of the diagonal unitary matrix quantum circuit at the Gray path processing stage and the second circuit depth of the diagonal unitary matrix quantum circuit at the Gray path processing stage.

In some embodiments, the quantum preparation module 2021 is further configured to: determine the diagonal unitary matrix quantum circuit at the inversion stage through a combination of the diagonal unitary matrix quantum circuit at the prefix copy stage, the diagonal unitary matrix quantum circuit at the Gray initialization stage, the diagonal unitary matrix quantum circuit at the suffix copy stage, and the diagonal unitary matrix quantum circuit at the Gray path processing stage, a circuit depth of the diagonal unitary matrix quantum circuit at the inversion stage being $O(\log m + 2^n/m)$.

In some embodiments, the quantum preparation module 2021 is further configured to: combine the diagonal unitary matrix quantum circuit at the prefix copy stage, the diagonal unitary matrix quantum circuit at the Gray initialization stage, the diagonal unitary matrix quantum circuit at the suffix copy stage, the diagonal unitary matrix quantum circuit at the Gray path processing stage, the diagonal unitary matrix quantum circuit at the inversion stage, and the single bit gate, to obtain the uniform control matrix circuit.

In some embodiments, the quantum preparation module 2021 is further configured to: determine a circuit depth of the quantum state preparation circuit; detect the circuit depth of the quantum state preparation circuit through a target diagonal unitary matrix; and prepare, when it is detected that the circuit depth of the quantum state preparation circuit is able to achieve the target diagonal unitary matrix, any quantum state through the quantum state preparation circuit.

An embodiment of this disclosure provides a computer program product or a computer program. The computer program product or the computer program includes a computer instruction (that is, an executable instruction), and the computer instruction is stored in a computer-readable storage medium. A processor of an electronic device reads the computer instruction from the computer-readable storage medium, and the processor executes the computer instruction, to cause the electronic device to perform the quantum state preparation circuit generating method in the embodiments of this disclosure.

An embodiment of this disclosure provides a computer-readable storage medium, storing an executable instruction, the executable instruction, when executed by a processor, causing the processor to perform the quantum state preparation circuit generating method provided in the embodiments of this disclosure.

In some embodiments, the computer-readable storage medium may be a memory such as an FRAM, a ROM, a PROM, an EPROM, an EEPROM, a flash memory, a magnetic surface memory, an optical disk, or a CD-ROM, or may be any device including one of or any combination of the foregoing memories.

In some embodiments, the executable instruction may be written in any form of programming language (including a compiled or interpreted language, or a declarative or procedural language) by using the form of a program, software, a software module, a script or code, and may be deployed in any form, including being deployed as an independent program or being deployed as a module, a component, a subroutine, or another unit suitable for use in a computing environment.

In an example, the executable instruction may, but does not necessarily, correspond to a file in a file system, and may be stored in a part of a file that saves another program or other data, for example, be stored in one or more scripts in a HyperText Markup Language (HTML) file, stored in a file that is specially used for a program in discussion, or stored in a plurality of collaborative files (for example, be stored in files of one or more modules, subprograms, or code parts).

As an example, the executable instruction may be deployed on one electronic device for execution, or executed on a plurality of electronic devices located at one location, or executed on a plurality of electronic devices distributed at a plurality of locations and interconnected by using a communication network.

The beneficial technical effects are as follows:

In the embodiments of this disclosure, an input register is configured, m ancilla qubits are acquired, and a copy register and a phase register are configured respectively. The copy register includes m/2 ancilla qubits, and the phase register includes m/2 ancilla qubits. The qubits are processed through the input register, the copy register, and the phase register, to obtain a diagonal unitary matrix quantum circuit corresponding to the quantum state preparation circuit. The diagonal unitary matrix quantum circuit and a single bit gate are combined to obtain a uniform control matrix circuit. Therefore, the quantum state preparation can be implemented through the designed quantum state preparation circuit based on any quantity of ancilla qubits, effectively reducing the depth of the quantum state preparation circuit, reducing the defect of quantum decay caused by the depth of the quantum state preparation circuit, and improving the performance of the quantum processor.

The foregoing descriptions are merely preferred embodiments of this disclosure, but are not intended to limit the protection scope of this disclosure. Any modification, equivalent replacement, or improvement made within the spirit and principle of this disclosure shall fall within the protection scope of this disclosure.

## Claims

1. A method for generating a quantum state preparation circuit, performed by an electronic device, the method comprising:

   configuring an input register storing n qubits;
   acquiring m ancilla qubits; configuring a copy register and a phase register storing m/2 ancilla qubits and m/2 ancilla qubits, respectively;
   processing qubits through the input register, the copy register, and the phase register, to obtain a diagonal unitary matrix quantum circuit;
   combining the diagonal unitary matrix quantum circuit and a single bit gate to obtain a uniform control matrix circuit; and
   combining different uniform control matrix circuits to obtain a quantum state preparation circuit.

2. The method according to claim 1, wherein the processing the qubits through the input register, the copy register, and the phase register, to obtain the diagonal unitary matrix quantum circuit comprises:

   performing prefix copy on the qubits through the input register and the copy register to obtain a diagonal unitary matrix quantum circuit at a prefix copy stage;
   performing Gray initialization on the qubits through the input register, the copy register, and the phase register, to obtain a diagonal unitary matrix quantum circuit at a Gray initialization stage;
   performing suffix copy on the qubits through the input register and the copy register to obtain a diagonal unitary matrix quantum circuit at a suffix copy stage;
   performing Gray path processing on the qubits through the input register, the copy register, and the phase register, to obtain a diagonal unitary matrix quantum circuit at a Gray path processing stage; and
   combining the diagonal unitary matrix quantum circuits at different stages through the input register, the copy register, and the phase register, to obtain a diagonal unitary matrix quantum circuit at an inversion stage.

3. The method according to claim 2, wherein the performing the prefix copy on the qubits through the input register and the copy register to obtain the diagonal unitary matrix quantum circuit at the prefix copy stage comprises:

copying each qubit in the input register once in the copy register through a controlled NOT gate (CNOT gate) in the diagonal unitary matrix quantum circuit at the prefix copy stage, to obtain a first copy result;

copying each qubit in the input register and the first copy result in the copy register twice in the copy register through two CNOT gates in the diagonal unitary matrix quantum circuit at the prefix copy stage, to obtain a second copy result; and

iteratively copying each qubit in the input register based on the second copy result until each qubit in the input register is copied to $m/2t$ qubits, and determining a circuit depth of the diagonal unitary matrix quantum circuit at the prefix copy stage, $t$ being a quantity of qubits to be copied in the input register.

4. The method according to claim 2, wherein the performing the Gray initialization on the qubits through the input register, the copy register, and the phase register, to obtain the diagonal unitary matrix quantum circuit at the Gray initialization stage comprises:

determining a first target linear function matching the phase register and a quantity of the first target linear function;

copying qubits in the input register and qubits in the copy register into the phase register through a CNOT gate in the diagonal unitary matrix quantum circuit at the Gray initialization stage;

executing the first target linear function at a target position of the phase register;

determining, when a target quantum state is achieved on each qubit of the phase register by executing the first target linear function, a first circuit depth of the diagonal unitary matrix quantum circuit at the Gray initialization stage;

performing phase rotation on qubits in the phase register;

determining, when a target rotation gate is achieved to act on a target qubit in the phase register, a second circuit depth of the diagonal unitary matrix quantum circuit at the Gray initialization stage; and

determining a circuit depth of the diagonal unitary matrix quantum circuit at the Gray initialization stage based on a sum of the first circuit depth of the diagonal unitary matrix quantum circuit at the Gray initialization stage and the second circuit depth of the diagonal unitary matrix quantum circuit at the Gray initialization stage.

5. The method according to claim 2, wherein the performing the suffix copy on the qubits through the input register and the copy register to obtain the diagonal unitary matrix quantum circuit at the suffix copy stage comprises:

restoring the qubits obtained through the prefix copy;

copying each qubit in the input register to $m/(2(n-t))$ qubits into the copy register;

adding the $m/(2(n-t))$ copied qubits into suffixes of the restored qubits; and

determining, when a suffix of each restored qubit is the $m/(2(n-t))$ copied qubits, a circuit depth of the diagonal unitary matrix quantum circuit at the suffix copy stage.

6. The method according to claim 2, wherein the performing the Gray path processing on the qubits through the input register, the copy register, and the phase register, to obtain the diagonal unitary matrix quantum circuit at the Gray path processing stage comprises:

determining a second target linear function matching the phase register and a quantity of the second target linear function;

copying qubits in the input register and qubits in the copy register into the phase register through a CNOT gate in the diagonal unitary matrix quantum circuit at the Gray path processing stage;

executing the second target linear function at a target position of the phase register;

determining, when a target quantum state is achieved on each qubit of the phase register by executing the second target linear function, a first circuit depth of the diagonal unitary matrix quantum circuit at the Gray path processing stage;

performing phase rotation on qubits in the phase register;

determining, when a target rotation gate is achieved to act on a target qubit in the phase register, a second circuit depth of the diagonal unitary matrix quantum circuit at the Gray path processing stage; and

determining a circuit depth of the diagonal unitary matrix quantum circuit at the Gray path processing stage based on a sum of the first circuit depth of the diagonal unitary matrix quantum circuit at the Gray path processing stage and the second circuit depth of the diagonal unitary matrix quantum circuit at the Gray path processing stage.

7. The method according to claim 2, wherein the combining the diagonal unitary matrix quantum circuits at different stages through the input register, the copy register, and the phase register, to obtain the diagonal unitary matrix quantum circuit at the inversion stage comprises:

determining the diagonal unitary matrix quantum circuit at the inversion stage through a combination of the diagonal unitary matrix quantum circuit at the prefix copy stage, the diagonal unitary matrix quantum circuit at the Gray initialization stage, the diagonal unitary matrix quantum circuit at the suffix copy stage, and the diagonal unitary matrix quantum circuit at the Gray path processing stage, wherein
a circuit depth of the diagonal unitary matrix quantum circuit at the inversion stage is $O(\log m + 2^n/m)$.

8. The method according to claim 2, wherein the combining the diagonal unitary matrix quantum circuit and the single bit gate to obtain the uniform control matrix circuit comprises:
combining the diagonal unitary matrix quantum circuit at the prefix copy stage, the diagonal unitary matrix quantum circuit at the Gray initialization stage, the diagonal unitary matrix quantum circuit at the suffix copy stage, the diagonal unitary matrix quantum circuit at the Gray path processing stage, the diagonal unitary matrix quantum circuit at the inversion stage, and the single bit gate, to obtain the uniform control matrix circuit.

9. The method according to claim 1, further comprising:

determining a circuit depth of the quantum state preparation circuit;
detecting the circuit depth of the quantum state preparation circuit through a target diagonal unitary matrix; and
preparing, when it is detected that the circuit depth of the quantum state preparation circuit is able to achieve the target diagonal unitary matrix, any quantum state through the quantum state preparation circuit.

10. An apparatus for generating quantum state preparation circuit, comprising:

a quantum preparation module, configured to configure an input register storing n qubits;
a quantum transport module, configured to acquire m ancilla qubits;
the quantum preparation module, further configured to:

configure a copy register and a phase register storing m/2 ancilla qubits and m/2 ancilla qubits respectively;
process qubits through the input register, the copy register, and the phase register, to obtain a diagonal unitary matrix quantum circuit;
combine the diagonal unitary matrix quantum circuit and a single bit gate to obtain a uniform control matrix circuit; and
combine different uniform control matrix circuits to obtain a quantum state preparation circuit.

11. The apparatus according to claim 10, wherein
the quantum preparation module is further configured to:

perform prefix copy on the qubits through the input register and the copy register to obtain a diagonal unitary matrix quantum circuit at a prefix copy stage;
perform Gray initialization on the qubits through the input register, the copy register, and the phase register, to obtain a diagonal unitary matrix quantum circuit at a Gray initialization stage;
perform suffix copy on the qubits through the input register and the copy register to obtain a diagonal unitary matrix quantum circuit at a suffix copy stage;
perform Gray path processing on the qubits through the input register, the copy register, and the phase register, to obtain a diagonal unitary matrix quantum circuit at a Gray path processing stage; and
combine the diagonal unitary matrix quantum circuits at different stages through the input register, the copy register, and the phase register, to obtain a diagonal unitary matrix quantum circuit at an inversion stage.

12. The apparatus according to claim 11, wherein
the quantum preparation module is further configured to:

copy each qubit in the input register once in the copy register through a controlled NOT gate (CNOT gate) in the diagonal unitary matrix quantum circuit at the prefix copy stage, to obtain a first copy result;
copy each qubit in the input register and the first copy result in the copy register twice in the copy register through two CNOT gates in the diagonal unitary matrix quantum circuit at the prefix copy stage, to obtain a second copy result; and
iteratively copy each qubit in the input register based on the second copy result until each qubit in the input register is copied to m/2t qubits, and determine a circuit depth of the diagonal unitary matrix quantum circuit at the prefix copy stage, t being a quantity of qubits to be copied in the input register.

13. A superconducting quantum chip, comprising a quantum state preparation circuit, the quantum state preparation circuit being obtained by the method for generating a quantum state preparation circuit according to any one of claims 1 to 9.

14. An electronic device, comprising:

a memory, configured to store an executable instruction; and
a processor, configured to implement, when executing the executable instruction stored in the memory, the method for generating a quantum state preparation circuit according to any one of claims 1 to 9.

15. A computer-readable storage medium, storing an executable instruction, the executable instruction, when executed by a processor, implementing the method for generating a quantum state preparation circuit according to any one of claims 1 to 9.

FIG. 1

FIG. 2

| Apparatus for generating Quantum state preparation circuit | Apparatus For generating Quantum state preparation circuit | |
| --- | --- | --- |

Superconducting quantum chip

Step 301. Configure an input register including n qubits

| Quantum state preparation circuit | |
| --- | --- |

Step 302. Acquire m ancilla qubits, and configure a copy register and a phase register respectively

Step 303. Process the qubits through the input register, the copy register, and the phase register, to obtain a diagonal unitary matrix quantum circuit corresponding to the quantum state preparation circuit

Step 304. Combine the diagonal unitary matrix quantum circuit and a single bit gate to obtain a uniform control matrix circuit

| Diagonal unitary matrix quantum circuit | |
| --- | --- |

Step 305. Combine different uniform control matrix circuits to obtain a quantum state preparation circuit

FIG. 3

$|x_1\rangle$
...
$|x_n\rangle$
$|0\rangle$
...
$|0\rangle$
$|0\rangle$
...
$|0\rangle$

m ancilla qubits

Prefix copy stage

Gray initialization stage

Suffix copy stage

Gray path processing stage

Inversion stage

Input register n qubits

Copy register m/2 ancilla qubits

Phase register m/2 ancilla qubits

FIG. 4

Apparatus for generating Quantum state preparation circuit

Apparatus for generating Quantum state preparation circuit

Superconducting quantum chip

Step 501. Perform prefix copy on the qubits through the input register and the copy register to obtain a diagonal unitary matrix quantum circuit at a prefix copy stage

Diagonal unitary matrix quantum circuits at different processing stages

Step 502. Perform Gray initialization on the qubits through the input register, the copy register, and the phase register, to obtain a diagonal unitary matrix quantum circuit at a Gray initialization stage

Step 503. Perform suffix copy on the qubits through the input register and the copy register to obtain a diagonal unitary matrix quantum circuit at a suffix copy stage

Step 504. Perform Gray path processing on the qubits through the input register, the copy register, and the phase register, to obtain a diagonal unitary matrix quantum circuit at a Gray path processing stage

Diagonal unitary matrix quantum circuits at different processing stages

Step 505. Combine the diagonal unitary matrix quantum circuits at different stages through the input register, the copy register, and the phase register, to obtain a diagonal unitary matrix quantum circuit at an inversion stage

## FIG. 5

n qubits $\quad \Lambda_n^1 \qquad \Lambda_n^2 \qquad \Lambda_n^3$

S   H   H   S$^+$

## FIG. 6

FIG. 7

FIG. 8

## INTERNATIONAL SEARCH REPORT

| International application No. |
| --- |
| **PCT/CN2021/123862** |

| A. | CLASSIFICATION OF SUBJECT MATTER |
| --- | --- |

G06N 10/00(2022.01)i

According to International Patent Classification (IPC) or to both national classification and IPC

| B. | FIELDS SEARCHED |
| --- | --- |

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPABSC; CNTXT; CNABS; OETXT; ENTXT; WPABS; DWPI; ENTXTC; VEN; CNKI; IEEE: 量子, 量子态, 量子比特, 制备, 制造, 酉, 复制, 拷贝, 相位, 寄存器, 电路, quantum, quantum state, quantum bit, qubit, qbit, prepare, process, unitary, copy, phase, register, circuit

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111052122 A (INTERNATIONAL BUSINESS MACHINES CORP.) 21 April 2020 (2020-04-21)<br>    entire document | 1-15 |
| A | CN 112232513 A (ORIGIN QUANTUM COMPUTING TECHNOLOGY CO., LTD.) 15 January 2021 (2021-01-15)<br>    entire document | 1-15 |
| A | CN 109063844 A (ORIGIN QUANTUM COMPUTING TECHNOLOGY CO., LTD.) 21 December 2018 (2018-12-21)<br>    entire document | 1-15 |
| A | US 2018107939 A1 (MICROSOFT TECHNOLOGY LICENSING LLC.) 19 April 2018 (2018-04-19)<br>    entire document | 1-15 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 January 2022** | **10 February 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/123862**

| Patent document cited in search report | | | Publication date (day/month/year) | Patent family member(s) | | | Publication date (day/month/year) |
|---|---|---|---|---|---|---|---|
| CN | 111052122 | A | 21 April 2020 | JP | 2020534603 | A | 26 November 2020 |
| | | | | WO | 2019058161 | A1 | 28 March 2019 |
| | | | | US | 2019095561 | A1 | 28 March 2019 |
| | | | | GB | 202004044 | D0 | 06 May 2020 |
| | | | | GB | 2579008 | A | 03 June 2020 |
| | | | | DE | 112017007826 | T5 | 23 April 2020 |
| CN | 112232513 | A | 15 January 2021 | None | | | |
| CN | 109063844 | A | 21 December 2018 | None | | | |
| US | 2018107939 | A1 | 19 April 2018 | WO | 2018075655 | A1 | 26 April 2018 |
| | | | | EP | 3507747 | A1 | 10 July 2019 |
| | | | | CN | 109844778 | A | 04 June 2019 |
| | | | | US | 10496931 | B2 | 03 December 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110893354